# EUROPEAN PATENT SPECIFICATION

(11) **EP 2 650 506 B1**
(45) Date of publication and mention of the grant of the patent: **13.03.2019**
(21) Application number: 13162669.9
(22) Date of filing: 08.04.2013
(51) Int. Cl.: F02C 3/34, F02C 6/08, F01D 11/04

(54) **A method and system for controlling a secondary flow system**
Verfahren und System zur Steuerung eines sekundären Strömungssystems
Procédé et système permettant de commander un système d'écoulement secondaire

(30) Priority: 12.04.2012 US 201213444948
(43) Date of publication of application: 16.10.2013
(73) Proprietor: General Electric Company, Schenectady, NY 12345 (US)
(72) Inventor: Wichmann, Lisa Anne, Greenville, SC South Carolina 29615 (US); Simpson, Stanley Frank, Greenville, SC South Carolina 29615 (US)
(74) Representative: Fischer, Michael Maria

(56) References cited:
- US-A1- 2005 076 645
- US-A1- 2010 247 292
- US-A1- 2012 023 956
- US-A1- 2012 023 957
- US-A1- 2012 023 958
- US-A1- 2012 023 959
- US-A1- 2012 023 962

## Description

The present application relates generally to a combined-cycle powerplant; and more particularly to a system and method for operating a turbomachine incorporated with stoichiometric exhaust gas recirculation (S-EGR).

In an air-ingesting turbomachine, compressed air and fuel are mixed and combusted to produce a high energy fluid (hereinafter "working fluid") that is directed to a turbine section. The working fluid interacts with turbine buckets to generate mechanical energy, which is transferred to a load. In particular, the turbine buckets rotate a shaft coupled to the load, such as an electrical generator. The shaft rotation induces current in a coil electrically coupled to an external electrical circuit. In the case where the turbomachine is part of a combined cycle power plant, the high energy fluids exiting the turbine section are directed to a heat recovery steam generator (HRSG), where heat from the working fluid is transferred to water for steam generation.

The combustion process creates undesirable emissions and/or pollutants, such as Carbon Monoxide (CO) and Oxides of Nitrogen (NOx). Reducing these pollutants is necessary for environmental and/or regulatory reasons. Exhaust gas recirculation (EGR) processes help to reduce these pollutants.

S-EGR is a form of EGR where the combustion process consumes a supplied oxidant. The oxidant can include, for example, air or an oxygen source. In a S-EGR system, only enough oxidant is supplied to the combustion system to achieve complete combustion, on a mole basis. The S-EGR process can be configured to yield an exhaust stream that includes a relatively high concentration of a desirable gas and is substantially oxygen-free. This desirable gas includes, but is not limited to: Carbon Dioxide (CO2), Nitrogen (N2), or Argon. Significantly, there is a desire for S-EGR systems and methods that can generate exhaust streams with relatively high concentrations of the desirable gas, which can then be supplied and used in third party processes.

The secondary circuit of an S-EGR turbomachine requires a cooling fluid that is also substantially oxygen-free. Therefore, there is a desire for a system and method for providing a substantially oxygen-free cooling fluid to a secondary circuit of the turbine section.

US 2012/023957, US 2012/023959, US 2005/076645, US 2012/023956 US 2012/023962 and US 2012/023958 disclose gas turbine power plants of the prior art.

According to the invention there is provided a system comprising: an oxidant compressor comprising an ac_inlet and an ac_outlet; a compressor comprising a compressor inlet and a compressor outlet; wherein the compressor operates independently of the oxidant compressor; at least one combustion system that operatively generates a working fluid and comprises a head end and a discharge end, wherein the at least one combustion system is fluidly connected to: the ac_outlet, the compressor outlet, and a first fuel supply; a first turbine section operatively connected to the compressor, wherein the turbine section comprises a PTinlet which receives the working fluid from the at least one combustion system, a PT_outlet that discharges the working fluid; at least one secondary flow circuit being operatively connected to the first turbine section for cooling and sealing portions of the first turbine section; a secondary combustion system fluidly connected downstream of the first turbine section, wherein the secondary combustion system receives fuel from a second fuel supply; a second turbine section connected downstream of the secondary combustion system; an exhaust section fluidly connected to an outlet of the second turbine section; an exhaust gas recirculation (EGR) system fluidly connected between a discharge of the exhaust section and the compressor inlet such that the working fluid exiting the exhaust section is ingested by the compressor inlet; wherein the EGR system comprises a control device for adjusting a physical property of the working fluid; an extraction from the first turbine section that removes a portion of the working fluid; and a secondary fluid source fluidly connected to the at least one secondary flow circuit, wherein the secondary fluid source supplies a substantially oxygen-free fluid to the at least one secondary flow circuit.

These and other features, aspects, and advantages of the present invention may become better understood when the following detailed description is read with reference to the accompanying figures (FIGS) in which like characters represent like elements/parts throughout the FIGS.

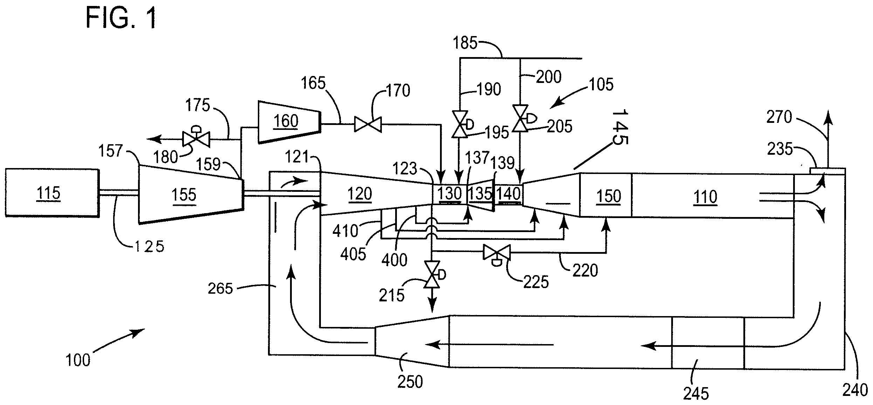

FIG 1 is a simplified schematic of an embodiment of a reheat gas turbine operating in a closed-cycle mode, not falling in the scope of the claims.

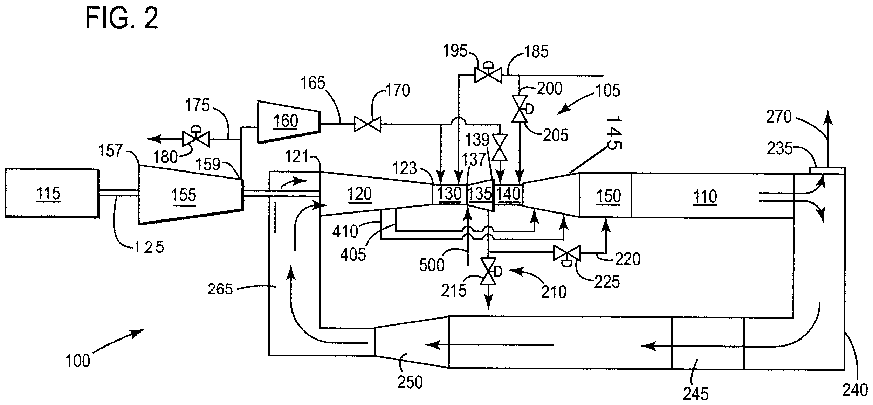

FIG 2 is a simplified schematic of a reheat gas turbine operating in a closed-cycle mode, illustrating an embodiment of the present invention. One or more specific embodiments of the present invention will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations unless specified otherwise.

The present invention may be applied to a variety of air-ingesting turbomachines. This may include, but is not limiting to, heavy-duty gas turbines, aero-derivatives, or the like. Although the following discussion relates to the gas turbines illustrated in FIGS 1-2, embodiments of the present invention may be applied to a gas turbine with a different configuration. For example, but not limiting of, the present invention may apply to a gas turbine with different, or additional, components than those illustrated in FIGS 1-2.

Embodiments of the present invention may apply to, but are not limited to, a powerplant operating under stoichiometric conditions. Here, the powerplant may have the form of a simple-cycle configuration or a combined-cycle configuration.

Stoichiometric conditions may be considered to be operating a combustion process with only enough oxidizer, for example oxygen, to promote complete combustion. Complete combustion burns a hydrocarbon-based fuel with oxygen and yields carbon dioxide and water as the primary byproducts. Many factors may influence whether complete combustion occurs. This may include, but are not limited to, oxygen in proximity to a fuel molecule, vibrations, dynamic events, shock waves, etc. In order to promote carbon dioxide formation rather than carbon monoxide formation, additional oxygen is normally delivered with the fuel supply to promote a complete combustion reaction.

Referring now to the FIGS, where the various numbers represent like components throughout the several views, FIG 1 is a simplified schematic of an embodiment of a reheat gas turbine 105 operating in a closed-cycle mode, illustrating an environment in which the present invention may operate.

In FIG 1, a site 100 includes: a reheat gas turbine 105, operatively connected to a heat recovery steam generator (HRSG) 110, a load 115, and an extraction 210, which may extract the desired fluid. The reheat gas turbine 105 may include a GT compressor 120 having a compressor inlet 121 and a compressor outlet 123. The GT compressor 120 ingests recirculated exhaust gases (hereinafter "working fluid") received from the EGR system 240, compresses the working fluid, and discharges the compressed working fluid through the compressor outlet 123. The reheat gas turbine 105 may include an oxidant compressor 155 that ingests an oxidant through an ac_inlet 157, compresses the same, and discharges the compressed air through the ac_outlet 159. The oxidant compressor 155 may deliver the compressed oxidant to the primary combustion system 130; through an airstream conduit 165 that may include: a vent conduit 175, a vent valve 180, booster compressor 160 and isolation valve 170; each of these components may be operated as needed.

In the present embodiment, the GT compressor 120 operates independently and distinct of the oxidant compressor 155. The reheat gas turbine 105 also includes a primary combustion system 130 that receives through a head end: the compressed working fluid from the GT compressor outlet 123; a fuel supply 185, comprising a first fuel conduit 190 and first fuel valve 195; and the compressed oxidant from the airstream conduit 165 (in an amount sufficient for stoichiometric combustion). The primary combustion system 130 combusts those fluids creating the working fluid, which may be substantially oxygen-free that exits the combustion system through a discharge end.

The fuel supply 185, in accordance with embodiments of the present invention, may provide fuel that derives from a single source to the primary and secondary combustion systems 130,140. Alternatively, the fuel supply 185 may provide fuel that derives from a first fuel source to either the primary or secondary combustion system 130,140; and fuel that derives from a second fuel source to the other combustion system 130,140.

An embodiment of the reheat gas turbine 105 also includes a primary turbine system 135 and a secondary turbine section 145. The primary turbine system 135 may have a PT_inlet 137 that receives some of the working fluid from the primary combustion system 130 of which the PT_inlet 137 is fluidly connected. The primary turbine system 135 may include rotating components and stationary components installed alternatively in the axial direction adjacent a rotor 125. The primary turbine system 135 converts the working fluid to a mechanical torque which drives the load 115 (generator, pump, compressor, etc). The primary turbine system 135 may then discharge the working fluid through the PT_outlet 139 to the secondary combustion system 140, then to the secondary turbine section 145, then to an exhaust section 150 and then to the HRSG 110, which operatively transfers heat from the working fluid to water for steam generation.

The primary turbine system 135 may also comprise at least one secondary flow circuit 400, which functionally cools the associated components, as described. In this first embodiment, the secondary flow circuit may receive cooling flow from the GT compressor 120. This may ensure that the cooling flow is substantially oxygen-free, due to the specific stoichiometric operation of this first embodiment of the present invention. Depending on the configuration of the primary turbine system 135, multiple secondary flow circuits may be used. For example, but not limited to, if the primary turbine system 135 comprises multiple stages, then the secondary flow circuit 400 may be configured in a manner that provides cooling to each stage.

The secondary turbine section 145 may comprise similar components and operate like the primary turbine system 135. In this embodiment, the secondary turbine section 145 may comprise multiple stages. Here, an auxiliary flow circuit 405,410 may be designated for each stage; such as, but not limiting to, auxiliary flow circuit_a, auxiliary flow circuit_b, etc. In this embodiment the auxiliary flow circuits 405,410 may receive the cooling fluid from the GT compressor.

The EGR system 240 operatively returns to the GT compressor 120 the working fluid exiting the HRSG 110. The EGR system 240 receives the working fluid discharged by the HRSG 110; which is fluidly connected to a receiving or upstream end of the EGR system 240. A discharge end of the EGR system 240 may be fluidly connected to the inlet of the GT compressor 120, as described. An embodiment of the EGR system 240 may comprise a control device that operatively adjusts a physical property of the working fluid. The control device may have the form of a heat exchanger 245, or an EGR compressor 250. As discussed below, embodiments of the EGR system 240 may comprise multiple control devices. The EGR system 240 may also comprise a damper 235 which facilitates a purging process.

The extraction 210 operationally removes a portion of the working fluid for use by a third-party process. The extraction 210 may be integrated with a circuit that comprises an extraction isolation valve 215, a recirculation conduit 220 and a recirculation valve 225. The extracted working fluid may be substantially oxygen-free, which is desirable for many third-party processes.

As illustrated in FIGS 1 and 2, different embodiments may position the extraction 210 at various locations of the gas turbine 105. The location of the extraction 210 may be a factor in determining whether the primary combustion system 130 or the secondary combustion system 140, is operated in a stoichiometric manner. As illustrated in FIG 1, the first embodiment positions the extraction 210 adjacent a discharge of the GT compressor 120. The working fluid within the GT compressor 120 may be used as the cooling fluid for both the primary turbine section 135 and the secondary turbine section 145, as illustrated in FIG 1. Here, the primary combustion system 130 may not be operating in stoichiometric mode, unlike the secondary combustion system 140.

The above discussion, in relation to FIG 1, describes the basic concept of a reheat gas turbine 105 configured for S-EGR operation. For convenience, components and elements that correspond to those identified in FIG 1 are identified with similar reference numerals in FIG 2, but are only discussed in particular, as necessary, or desirable, to an understanding of the second embodiment.

FIG 2 is a simplified schematic of a reheat gas turbine operating in a closed-cycle mode, illustrating an embodiment of the present invention. The primary difference between the reheat gas turbine 105 in FIG 2 and FIG 1 is the location of the extraction 210. In this second embodiment, the extraction 210 is located at a discharge of the primary turbine 135 (as illustrated in FIG 2). In this configuration the primary combustion system 130 may operate in stoichiometric manner, and the secondary combustion system 140 may not operate in a stoichiometric manner. This may result in the working fluid in the EGR system 240 and the GT Compressor 120 having undesired oxygen, which operationally will enter the secondary flow circuit. Hence, the GT compressor 120 may not serve a source of cooling fluid for the secondary flow circuit 400. To avoid this, the cooling fluid supplied by the GT Compressor 120 will need to bypass the primary combustion system 130 and primary turbine section 135.

This embodiment of the present invention may provide a cooling fluid that derives from a secondary fluid source 500, which may be available on the site 100. For example, but not limited to, the external source 500 may derive from an enhanced oil recovery system, a concentrated carbon dioxide source, or any other source that can provide a cooling fluid that is substantially oxygen-free.

Although specific embodiments have been illustrated and described herein, those of ordinary skill in the art appreciate that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

As one of ordinary skill in the art will appreciate, the many varying features and configurations described above in relation to the several embodiments may be further selectively applied to form other possible embodiments of the present invention. Those skilled in the art will further understand that all possible iterations of the present invention are not provided or discussed in detail, even though all combinations and possible embodiments embraced by the several claims below or otherwise are intended to be part of the instant application. In addition, from the above description of several embodiments of the invention, those skilled in the art will perceive improvements, changes, and modifications. Such improvements, changes, and modifications within the skill of the art are also intended to be covered if within the scope of the appended claims. Further, it should be apparent that the foregoing relates only to the described embodiments of the present application and that numerous changes and modifications may be made herein without departing from the scope of the application as defined by the following claims.

## Claims

1. A system comprising:
an oxidant compressor (155) comprising an ac_inlet (157) and an ac_outlet (159);
a compressor (120) comprising a compressor inlet (121) and a compressor outlet (123); wherein the compressor operates independently of the oxidant compressor;
at least one combustion system (130) that operatively generates a working fluid and comprises a head end and a discharge end, wherein the at least one combustion system (130) is fluidly connected to: the ac_outlet (159), the compressor outlet (123), and a first fuel supply;
a first turbine section (135) operatively connected to the compressor (120), wherein the turbine section comprises a PT_inlet (137) which receives the working fluid from the at least one combustion system, a PT_outlet (139) that discharges the working fluid; at least one secondary flow circuit (400) being operatively connected to the first turbine section for cooling and sealing portions of the first turbine section;
a secondary combustion system (140) fluidly connected downstream of the first turbine section, wherein the secondary combustion system receives fuel from a second fuel supply;
a second turbine section (145) connected downstream of the secondary combustion system;
an exhaust section (150) fluidly connected to an outlet of the second turbine section;
an exhaust gas recirculation (EGR) system (240) fluidly connected between a discharge of the exhaust section and the compressor inlet such that the working fluid exiting the exhaust section is ingested by the compressor inlet; wherein the EGR system comprises a control device for adjusting a physical property of the working fluid;
an extraction (210) from the first turbine section (135) that removes a portion of the working fluid; and
a secondary fluid source (500) fluidly connected to the at least one secondary flow circuit, wherein the secondary fluid source supplies a substantially oxygen-free fluid to the at least one secondary flow circuit.

2. The system of claim 1, wherein the secondary fluid source derives from an external source.

3. The system of any preceding claim, wherein the second turbine section further comprises at least one auxiliary flow circuit.

4. The system of any preceding claim further comprising a heat recovery steam generator (HRSG) fluidly connected to the discharge of the exhaust section, wherein the HRSG operatively removes heat from the working fluid and then discharges the working fluid.

5. The system of any preceding claim, wherein the EGR system is fluidly integrated with the compressor inlet in a manner that supports a substantially stoichiometric operating condition.

6. The system of any preceding claim, wherein the control device and the compressor jointly operate in a manner that determines a pressure of the working fluid flowing through the extraction.

## Patentansprüche

1. System, umfassend:
einen Oxidationsmittelkompressor (155), der einen ac_Einlass (157) und einen ac_Auslass (159) umfasst;
einen Kompressor (120) mit einem Kompressoreinlass (121) und einem Kompressorauslass (123); wobei der Kompressor unabhängig von dem Oxidationsmittelkompressor arbeitet;
zumindest ein Verbrennungssystem (130), das betriebsmäßig ein Arbeitsfluid erzeugt und ein Kopfende und ein Ablassende umfasst, wobei das zumindest eine Verbrennungssystem (130) fluidmäßig verbunden ist mit: dem ac_Auslass (159), dem Kompressorauslass (123) und einer ersten Kraftstoffzufuhr;
eine erste Turbinensektion (135), die betriebsmäßig mit dem Kompressor (120) verbunden ist, wobei die Turbinensektion einen PT_Einlass (137), der das Arbeitsfluid von dem zumindest einen Verbrennungssystem empfängt, einen PT_Auslass (139), der das Arbeitsfluid ablässt, umfasst;
zumindest einen sekundären Strömungskreislauf (400), der betriebsmäßig mit der ersten Turbinensektion zum Kühlen und Abdichten von Abschnitten der ersten Turbinensektion verbunden ist;
ein sekundäres Verbrennungssystem (140), das stromabwärts von der ersten Turbinensektion fluidverbunden ist, wobei das sekundäre Verbrennungssystem Kraftstoff von einer zweiten Kraftstoffzufuhr empfängt;
eine zweite Turbinensektion (145), die stromabwärts von dem sekundären Verbrennungssystem verbunden ist;
eine Abgassektion (150), die mit einem Auslass der zweiten Turbinensektion fluidverbunden ist;
ein Abgasrückführungssystem (EGR-System) (240), das zwischen einem Ablass der Abgassektion und dem Kompressoreinlass fluidverbunden ist, sodass das aus der Abgassektion austretende Arbeitsfluid durch den Kompressoreinlass aufgenommen wird; wobei das EGR-System eine Steuervorrichtung zum Einstellen einer physikalischen Eigenschaft des Arbeitsfluids umfasst;
eine Extraktion (210) von der ersten Turbinensektion (135), die einen Teil des Arbeitsfluids entfernt; und
eine sekundäre Fluidquelle (500), die mit dem zumindest einen sekundären Strömungskreislauf fluidverbunden ist, wobei die sekundäre Fluidquelle dem zumindest einen sekundären Strömungskreislauf ein im Wesentlichen sauerstofffreies Fluid zuführt.

2. System nach Anspruch 1, wobei die sekundäre Fluidquelle von einer externen Quelle stammt.

3. System nach einem der vorstehenden Ansprüche, wobei die zweite Turbinensektion weiter zumindest einen Hilfsströmungskreislauf umfasst.

4. System nach einem der vorstehenden Ansprüche, weiter umfassend einen Wärmerückgewinnungsdampfgenerator (HRSG), der mit dem Ablass der Abgassektion fluidverbunden ist, wobei der HRSG betriebsmäßig Wärme von dem Arbeitsfluid entfernt und dann das Arbeitsfluid ablässt.

5. System nach einem der vorstehenden Ansprüche, wobei das EGR-System fluidisch mit dem Kompressoreinlass integriert ist, auf eine Weise, die einen im Wesentlichen stöchiometrischen Betriebszustand unterstützt.

6. System nach einem der vorstehenden Ansprüche, wobei die Steuervorrichtung und der Kompressor auf eine Weise zusammenarbeiten, die einen Druck des durch die Extraktion strömenden Arbeitsfluids bestimmt.

## Revendications

1. Système comprenant :
un compresseur d'oxydant (155) comprenant une ac_entrée (157) et une ac_sortie (159) ;
un compresseur (120) comprenant une entrée de compresseur (121) et une sortie de compresseur (123) ; dans lequel le compresseur fonctionne indépendamment du compresseur d'oxydant ;
au moins un système de combustion (130) qui génère opérationnellement un fluide de travail et comprend une extrémité de tête et une extrémité d'évacuation, dans lequel l'au moins un système de combustion (130) est relié fluidiquement à : la ac_sortie (159), la sortie de compresseur (123), et une première alimentation en carburant ;
une première section de turbine (135) reliée opérationnellement au compresseur (120), dans lequel la section de turbine comprend une PT_entrée (137) laquelle reçoit le fluide de travail de l'au moins un système de combustion, une PT_sortie (139) qui évacue le fluide de travail ; au moins un circuit d'écoulement secondaire (400) relié opérationnellement à la première section de turbine pour refroidir et étanchéifier des portions de la première section de turbine ;
un système de combustion secondaire (140) relié fluidiquement en aval de la première section de turbine, dans lequel le système de combustion secondaire reçoit du carburant d'une deuxième alimentation de carburant ;
une deuxième section de turbine (145) reliée en aval du système de combustion secondaire ;
une section d'échappement (150) reliée fluidiquement à une sortie de la deuxième section de turbine ;
un système de recirculation de gaz d'échappement (EGR) (240) relié fluidiquement entre une évacuation de la section d'échappement et l'entrée de compresseur de sorte que le fluide de travail sortant de la section d'échappement est ingéré par l'entrée de compresseur ; dans lequel le système EGR comprend un dispositif de commande pour ajuster une propriété physique du fluide de travail ;
une extraction (210) de la première section de turbine (135) qui retire une portion du fluide de travail ; et
une source de fluide secondaire (500) reliée fluidiquement à l'au moins un circuit d'écoulement secondaire, dans lequel la source de fluide secondaire fournit un fluide sensiblement sans oxygène à l'au moins un circuit d'écoulement secondaire.

2. Système selon la revendication 1, dans lequel la source de fluide secondaire dérive d'une source externe.

3. Système selon l'une quelconque des revendications précédentes, dans lequel la deuxième section de turbine comprend en outre au moins un circuit d'écoulement auxiliaire.

4. Système selon l'une quelconque des revendications précédentes comprenant en outre un générateur de vapeur de récupération de chaleur (HRSG) relié fluidiquement à l'évacuation de la section d'échappement, dans lequel le HRSG retire fluidiquement la chaleur du fluide de travail et ensuite évacue le fluide de travail.

5. Système selon l'une quelconque des revendications précédentes, dans lequel le système EGR est intégré fluidiquement avec l'entrée de compresseur de manière à supporter une condition de fonctionnement sensiblement stoechiométrique.

6. Système selon l'une quelconque des revendications précédentes, dans lequel le dispositif de commande et le compresseur fonctionnent conjointement de manière à déterminer une pression du fluide de travail s'écoulant à travers l'extraction.
